# EUROPÄISCHE PATENTSCHRIFT

(11) **EP 3 914 188 B1**
(45) Veröffentlichungstag und Bekanntmachung des Hinweises auf die Patenterteilung: **08.03.2023**
(21) Anmeldenummer: 20701720.3
(22) Anmeldetag: 21.01.2020
(51) Int. Cl.: A61C 8/00

(54) **OKKLUSALSCHRAUBE, DENTALIMPLANTATSYSTEM UND SET**
OCCLUSAL SCREW, DENTAL IMPLANT SYSTEM AND SET
VIS OCCLUSALE, SYSTÈME D'IMPLANT DENTAIRE ET ENSEMBLE

(30) Priorität: 22.01.2019 CH 712019
(43) Veröffentlichungstag der Anmeldung: 01.12.2021
(73) Patentinhaber: Z-Systems AG, 4702 Oensingen (CH)
(72) Erfinder: THOMKE, Ernst, 2540 Grenchen (CH); THEUBET, Claude, 4712 Laupersdorf (CH)
(74) Vertreter: Frei Patent Attorneys
(86) Internationale Anmeldenummer: PCT/EP2020/051359
(87) Internationale Veröffentlichungsnummer: WO 2020/152135

(56) Entgegenhaltungen:
- EP-A1- 2 168 530
- US-A- 5 810 592

## Beschreibung

Die Erfindung bezieht sich auf das Gebiet der Medizinaltechnik. Sie bezieht sich auf eine Okklusalschraube, ein keramisches Dentalimplantatsystem sowie auf ein Set.

Unter den Dentalimplantatsystemen sind zweiteilige Implantatsysteme verbreitet. Diese besitzen das eigentliche Implantat (Auch "Verankerungsteil" oder, wenn es mit einem Gewinde versehen ist, "Schraube" genannt) und ein zur Befestigung daran vorgesehenes Aufbauteil ("Abutment"). Das Verankerungsteil kann dabei so ausgestaltet sein, dass es ungefähr bündig mit der Knochenoberfläche eingebracht wird (als ein sogenanntes "bone-level"-Implantat), oder es kann mit einem Bereich koronal der Knochenoberfläche versehen sein, der oft gegenüber dem enossalen, i.a. mit einem Gewinde versehenen Bereich aufgeweitet ist, manchmal als "Tulpe" bezeichnet wird und der vorgesehen ist, bis ungefähr zur Zahnfleischoberfläche zu reichen. Implantate mit einem solchen transgingivalen Bereich werden "tissue level"-Implantate genannt. Der aus dem Zahnfleisch herausragende Bereich ("Pfosten"), welcher dem Befestigen einer Suprakonstruktion, also einer Krone, Brücke oder Prothese oder dergleichen, dient, wird in zweiteiligen Implantatsystedmen durch das Abutment gebildet.

Als Implantatmaterialien sind nebst dem bewährten Titan keramische Materialien von zunehmender Bedeutung, darunter insbesondere Zirkonoxidkeramiken (auch, wissenschaftlich nicht ganz korrekt, als "Zirkon" bezeichnet). Keramikimplantate haben aufgrund ihrer Farbe ästhetische Vorteile; ausserdem begünstigen sie besonders gut die Integration von Knochen- und Gingivagewebe an der Implantatoberfläche und stossen oft auf eine bessere Akzeptanz bei Patienten als metallische Implantate. Sie haben aber den Nachteil, dass sie sprödhart sind und im Gegensatz zu den duktileren metallischen Implantaten bei grosser mechanischer Belastung zu Sprödbrüchen neigen, weshalb auch nicht sämtliche Implantatformen ohne Weiteres fertigbar sind.

Bei zweiteiligen Implantatsystemen gibt es verschiedene Möglichkeiten zur Befestigung des Abutments am Verankerungsteil. In titanbasierten Systemen wird oft eine Schraube, in diesem Text Okklusalschraube genannt, verwendet, welche durch eine von koronal her zugängliche Aussparung im Abutment hindurch geführt ist und in ein Gewinde im Verankerungsteil eingreift. Der Kopf der Okklusalschraube liegt an einer Schulter an, welche in der genannten Aussparung des Abutments ausgebildet ist und drückt dadurch das Abutment gegen das Verankerungsteil und dessen Befestigungspfosten in die dafür vorgesehene Aussparung des Verankerungsteils hinein.

Eine solche Okklusalschraube bewirkt konstruktionsgemäss lokal an gewissen Strukturen des Verankerungsteils und des Abutments sehr hohe Kräfte, weshalb sie zwar in titanbasierten Systemen sehr verbreitet ist, bei den sprödharten keramischen Implantatsystemen aber oft zu einem Versagen führen würde. Daher sind keramische Systeme meist geklebt, d.h. das Abutment wird durch einen Kleber am Verankerungsteil befestigt, was die bekannten Nachteile von Klebeverbindungen mit sich bringt.

In der WO 2017/096494 wird ein zweiteiliges Bone-Level-Implantatsystem auf Keramikbasis beschrieben, bei welchem eine Okklusalschraube mit Hilfe eines Einsatzelements, das in der Aussparung des Verankerungsteils gelagert ist, gehalten wird.

Auch in der CH 714 831 werden geschraubte keramische Dentalimplantatsysteme gezeigt. Die Formen der entsprechenden Okklusalschrauben lassen jedoch im Allgemeinen nur die Fertigung aus metallischen Werkstoffen zu.

Die US 5,810,592 zeigt ein dentales Implantatsystem mit Einheil-Abutment und mit Schrauben für dessen Befestigung. Die EP2168530 betrifft ein keramisches Implantat mit keramischer Schraube zur Befestigung eines Abutments am Implantat.

Es ist eine Aufgabe der vorliegenden Erfindung, ein zweiteiliges Implantatsystem mit Verankerungsteil und Abutment sowie geeignete Bauteile für ein solches zur Verfügung zu stellen, welche Nachteile des Standes der Technik überwinden, welche für eine gute Akzeptanz bei Patienten ausgerüstet sind und ausserdem so ausgestaltet sind, dass ein Versagen während der Befestigung des Abutments am Verankerungsteil und danach im implantierten Zustand wenig wahrscheinlich ist.

Diese Aufgabe wird gelöst durch die Erfindung wie sie in den Patentansprüchen definiert ist.

Gemäss einem Aspekt der Erfindung wird eine Okklusalschraube für ein zweiteiliges Dentalimplantatsystem mit Verankerungsteil und Abutment zur Verfügung gestellt, die einen Schraubenkopf und einen Schraubenschaft aufweist, wobei der Schraubenschaft ein eine Schraubenachse definierendes Schraubengewinde aufweist und vorgesehen ist, durch eine in axialer Richtung durchgehende Öffnung des Abutments hindurch in ein Innengewinde in einer Aussparung des Verankerungsteils einzugreifen, und wobei der Schraubenkopf apikal einen Schraubenanschlag bildet. Der Schraubenanschlag ist, um das Abutment relativ zum Verankerungsteil zu fixieren, zum Anstehen an einer entsprechenden Schulter der Öffnung des Abutments ausgebildet, wenn der Schraubenschaft in das genannte Innengewinde eingreift. Die Okklusalschraube zeichnet sich dadurch aus, dass sie aus einem keramischen Material besteht und eine Eingriffpartie aufweist, die eine Aussenstruktur aufweist, welche nicht um die Schraubenachse rotationssymmetrisch ist, mindestens bereichsweise zylindrisch oder konisch ist und geeignet ist, mit einer entsprechenden Innenstruktur in einer distalen Aussparung eines Schraubwerkzeugs zusammenzuwirken, um die Okklusalschraube drehfest ans Schraubwerkzeug zu koppeln.

Die Okklusalschraube gemäss diesem Ansatz unterscheidet sich also von konventionellen Okklusalschrauben, die im Allgemeinen auf Titanbasis gefertigt sind, dadurch, dass sie zum Zusammenwirken mit dem Schraubwerkzeug keine Innenstruktur, sondern eine Aussenstruktur, aufweist, beispielsweise einen Aussensechskant, oder einen Aussenvierkant, Aussenfünfkant, Aussensiebenkant, Aussenachtkant oder eine andere geeignete Aussenstruktur. Dabei ist die Symmetrie der Aussenstruktur insbesondere so gewählt, dass die Schraube in mehreren möglichen relativen Orientierungen mit dem Schraubwerkzeug in Eingriff bringbar ist. D.h. die Aussenstruktur kann insbesondere symmetrisch in Bezug auf Drehungen um einen bestimmten Winkel, bspw. 60° im Falle eines Aussensechskants, sein.

Unter Aussenstruktur versteht man eine von einer kreiszylindrischen Form verschiedene Struktur einer äusseren Oberfläche, im Gegensatz zu einer Innenstruktur welche an einer Innenwand einer Öffnung vorhanden ist. Die Aussenstruktur wird insbesondere eine Struktur der äusseren Mantelfläche beinhalten und also nicht bloss auf die Stirnfläche beschränkt sein.

Im Zusammenhang mit Keramik als Schraubenmaterial hat sich die Ausgestaltung des Schraubenkopfes mit Aussenstruktur anstatt Innenstruktur als vorteilhaft herausgestellt. Insbesondere kann der Schraubenkopf im Vergleich zum Stand der Technik massiver und daher beim Eindrehen der Okklusalschraube weniger bruchanfällig sein.

Das Schraubwerkzeug weist entsprechend der Eingriffpartie einen Eingriffbereich mit der distalen Aussparung auf.

Auch bei vollständig keramischen Dentalimplantatsystemen werden nicht im Patienten verbleibende Werkzeuge aus anderen Materialien als Keramik ohne Weiteres akzeptiert. Daher kann insbesondere das Schraubwerkzeug mindestens im distalen Bereich aus einem geeigneten harten und doch duktilen Material gefertigt sein, beispielsweise Edelstahl. Das erlaubt es, den Eingriffbereich relativ dünnwanding auszugestalten, was angesichts des beschränkten Durchmessers der durchgehenden Öffnung im Abutment und des Wunsches nach einem möglichst massiven Schraubenkopf vorteilhaft ist. Mit anderen Worten erlaubt das erfindungsgemässe Vorgehen, die Materialstärke der Okklusalschraube, namentlich von deren Kopf, zu optimieren, was im Zusammenhang mit dem keramischen Material besonders günstig ist.

In Ausführungsformen bildet der Schraubenkopf apikal der Eingriffpartie eine Aufweitung aus. Ein Aussendurchmesser im Bereich der Aufweitung kann ungefähr dem Aussendurchmesser des Eingriffbereichs des Schraubwerkzeugs entsprechen. Es kann also das Schraubenwerkzeug mit dem breitesten Bereich des Schraubenkopfs fluchten

Besonders vorteilhaft ist eine Ausgestaltung, bei welcher die Eingriffpartie okklusal einen zylindrischen Bereich (in diesem Text wird "zylindrisch" allgemein nicht nur für kreiszylindrische Formen verwendet, sondern im Sinne des allgemeinen mathematischen Zylinders entlang einer Teilstrecke einer Achse, insbesondere der Schraubenachse translationssymmetrische Flächen) und apikal davon einen sich nach apikal stetig erweiternden Klemmbereich aufweist. Der Klemmbereich kann bspw. konisch sein. Dass sich der Klemmbereich stetig erweitert, heisst, dass in Umfangrichtung mindestens bereichsweise keine zur Schraubenachse senkrechte Schulter ausgebildet wird, sondern eine Tangente an die äussere Oberfläche im Klemmbereich in einem von 0° und von 90° verschiedenen Winkel zur Schraubenachse steht, bspw. einem Winkel zwischen 3.5° und 10°.

Der Klemmbereich kann insbesondere konisch sein, mit einem Konuswinkel von beispielsweise zwischen 7° und 20°.

Apikal des Klemmbereichs kann ein konkaver Bereich ausgebildet sein. Es hat sich gezeigt, dass die Vermeidung von Innenkanten die Bruchfestigkeit der keramischen Okklusalschraube verbessert.

Auch auf der apikalen Seite des Schraubenkopfs kann eine Innenkante vermieden sein, indem der Schraubenschaft über eine Hohlkehle (d.h. einen weiteren konkaven Bereich) in den Schraubenkopf übergeht.

Der Anschlag auf der apikalen Seite des Schraubenkopfs kann anstatt von einer zur Schraubenachse senkrechten Schulter von einem konischen Anschlagbereich gebildet sein. Der den Anschlagbereich bildende Konus ist dann vergleichsweise flach, mit einem Konuswinkel von mehr als 90°.

Ein erfindungsgemässes Implantatsystem weist nebst einer Okklusalschraube der vorstehend beschriebenen Art auch ein Verankerungsteil, beispielsweise mit Aussengewinde, mit einer Aussparung auf. Die Aussparung bildet dabei koronal einen Aufnahmebereich zur Aufnahme eines Befestigungspfostens des Abutment sowie apikal davon ein Innengewinde zum Zusammenwirken mit dem Schraubenschaft der Okklusalschraube aus. Der Aufnahmebereich kann koronal einen konischen Abstützbereich und apikal davon einen Innenstrukturbereich mit einer Eindrehgeometrie (Innengeometrie) für einen Eingriff eines Eindrehwerkzeugs sowie zum Zusammenwirken mit einer entsprechenden Verdrehsicherungsstruktur des Abutments ausbilden.

Weiter gehört zum Implantatsystem ein Abutment mit einem Befestigungspfosten, mit einer in axialer Richtung durchgehenden Öffnung mit einem Anschlag für den Schraubenkopf der Okklusalschraube sowie mit einer okklusalen Struktur (bspw. einem koronalen Pfosten) zur Befestigung einer Krone oder einer anderen Tertiärstruktur. Zum Implantatsystem kann ferner auch ein Schraubwerkzeug gehören, insbesondere ein Werkzeug mit den vorstehend diskutierten Eigenschaften.

Das Schraubwerkzeug kann ergänzend oder alternativ zu diesen Eigenschaften auch eine Sollbruchstelle aufweisen. Das Drehmoment zum Brechen des Schraubwerkzeugs an der Sollbruchstelle ist dabei so gewählt, dass es kleiner, insbesondere signifikant kleiner ist als das tiefste Drehmoment, bei welchem ein Brechen der Okklusalschraube möglich ist.

Dabei sind sowohl das Verankerungsteil als auch das Abutment ebenfalls keramisch. Das Verankerungsteil kann insbesondere als bone-level-Verankerungsteil (subgingivales Implantat) ausgebildet sein, d.h. es gehört als Ganzes zum enossalen Teil des Implantatsystems und ist so geformt, dass es zum Versenken bis auf Knochenkammhöhe vorgesehen ist, was beispielsweise das Vorhandensein eines sich gegenüber dem Gewinde substantiell aufweitenden koronalen (transgingivalen) Bereichs ausschliesst. Es kann aber anders ausgestaltet sein, beispielsweise auch als tissue-level-Verankerungsteil.

Ebenfalls Gegenstand der Erfindung ist ein Set aus einer Okklusalschraube der in diesem Text beschriebenen Art und einem Schraubwerkzeug der ebenfalls in diesem Text beschriebenen Art. In diesem Text beschriebene oder in den Patentansprüchen definierte Merkmale der Okklusalschraube können sich sowohl auf die Okklusalschraube als solche als auch auf das Set als auch auf das Implantatsystem beziehen. Analog gilt für Merkmale des Schraubwerkzeugs, dass sie sich sowohl auf das Set als auch auf das Implantatsystem beziehen können.

Das keramische Material der Okklusalschraube, sowie gegebenenfalls des Verankerungsteils und/oder des Abutments kann eine Oxidkeramik, bspw. eine Zirkonoxid-basierte Keramik sein, insbesondere eine Yttrium-stabilisierte Zirkonoxid-basierte Keramik. Auch Aluminiumoxid-basierte Keramiken sind verwendbar.

In diesem Text werden die Begriffe "koronal" und "apikal" in Bezug auf die Elemente des Implantatsystems so verwendet, wie sie für den implantierten Zustand, in welchem das Verankerungsteil in den Kieferknochen eingeschraubt ist und das Abutment (und ggf. die Suprakonstruktion) am Verankerungsteil befestigt ist, gelten, analog zum natürlichen Zahn, d.h. "apikal" ist die Richtung zur Wurzelspitze hin, ins Innere des Kieferknochens, "koronal" die entgegengesetzte Richtung zur Zahnkrone hin.

Im Folgenden wird der Erfindungsgegenstand anhand von bevorzugten Ausführungsbeispielen, welche in den beiliegenden Zeichnungen dargestellt sind, näher erläutert. Es zeigen in teilweise von Figur zu Figur verschiedenen Massstäben:
- Fig. 1: ein Implantatsystem mit Verankerungsteil, Abutment, Okklusalschraube und Schraubwerkzeug in einer Ansicht,
- Fig. 2: eine Schnittdarstellung (parallel zur Achse, entlang der Ebene A-A geschnitten) des Systems gemäss Figur 1
- Fig. 3: eine Ansicht entsprechend Fig. 1 des Systems im zusammengesetzten Zustand;
- Fig. 4: eine Schnittdarstellung (parallel zur Achse, entlang der Ebene B-B geschnitten) der Anordnung gemäss Figur 3;
- Fig. 5: eine Darstellung der Okklusalschraube;
- Fig. 6: ein Detail der Okklusalschraube;
- Fig. 7: eine Schnittdarstellung eines geeigneten Schraubwerkzeugs; und
- Fig. 8: ein Detail des Schraubwerkzeugs aus Fig. 7.

In den Figuren bezeichnen gleiche Bezugszeichen gleiche oder analoge Teile.

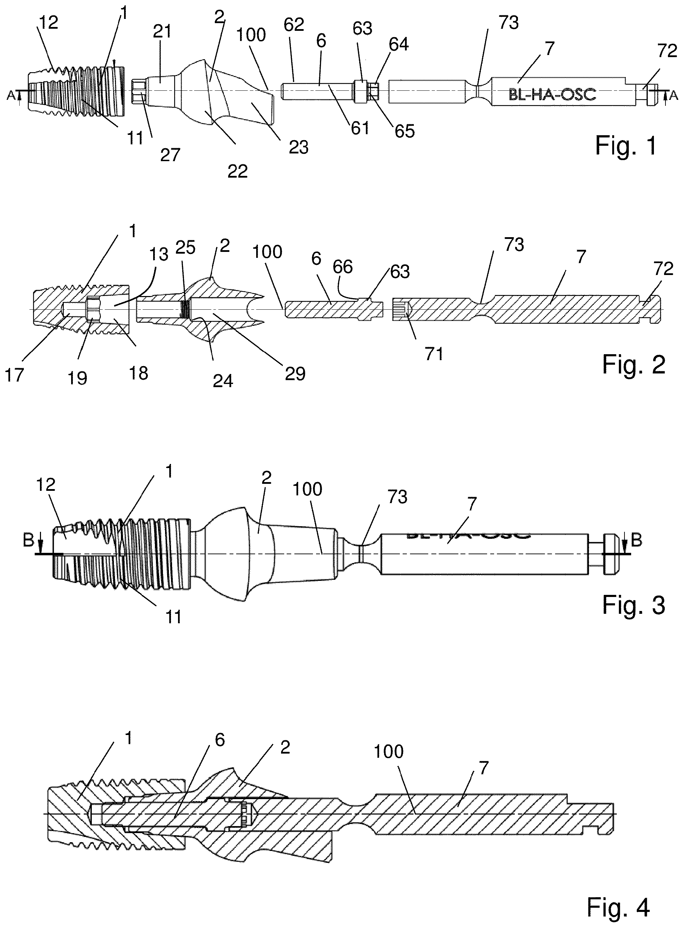

Das Dentalimplantat (Verankerungsteil 1), welches unter anderem in **Figuren 1-4** dargestellt ist, weist ein sich fast über die ganze Länge, fast bis zum koronalen Ende erstreckendes Aussengewinde 11 auf, das eine Achse 100 definiert. Das Verankerungsteil 1 hat eine sich nach apikal leicht verjüngende Form, so, dass es im Querschnitt entlang einer Ebene parallel zur Achse 100 als Ganzes bis auf die Gewindevertiefungen und apikale Spannuten 12 leicht konvex gekrümmt ist und als Ganzes stetig von einer koronal ungefähr zylindrischen in eine apikal sich verjüngenden Form übergeht. Das Aussengewinde 11 hat eine nicht-konstante Gewindetiefe und ist beispielsweise selbstschneidend ausgebildet.

Zum koronalen Ende hin offen ist eine Aussparung 13, in welche im fertig implantierten Zustand des Implantatsystems ein Befestigungspfosten 21 eines Abutments 2 hineinragt. Die Ausnehmung bildet einen koronalen Abstützbereich 18, apikal davon einen Eindrehgeometriebereich 19 und apikal von diesem einen Innengewindebereich 17 aus. Der Abstützbereich 18 weist einen insgesamt konischen Verlauf mit einem sich nach koronal leicht aufweitenden Durchmesser auf. Im Eindrehgeometriebereich 19 bildet die Ausnehmung eine Eindrehgeometrie, indem sie nicht rotationssymmetrisch um die Achse 100 verläuft. Im dargestellten Ausführungsbeispiel eine im Querschnitt entlang einer Ebene senkrecht zur Achse als gleichseitiges Sechseck mit abgerundeten Ecken ausgebildet, wobei sie zylindrisch in dem Sinn ist, dass sie entlang der Achse einen konstanten Querschnitt aufweist. Der Innengewindebereich ist mit einem Innengewinde versehen, welches auf ein Schraubengewinde der Okklusalschraube abgestimmt ist.

Im dargestellten Ausführungsbeispiel ist das Verankerungsteil ein bone-level-Implantat, bei welchem die Implantatschulter 10 mit zirkulärer Kante, welche die Innenverbindung zwischen Verankerungsteil 1 und Abutment 2 abschliesst, auf Knochenniveau ist. Die Erfindung lässt sich aber auch auf andere zweiteilige Implantatsysteme anwenden, namentlich auch auf "tissue level"-Implantate, bei welchen am Verankerungsteil koronal des enossalen Teils mit Gewinde ein bspw. tulpenartig aufgeweiteter transgingivaler Bereich ausgebildet ist.

Das Abutment 2 weist nebst dem Befestigungspfosten 21 einen koronalen Pfosten 23 zur Befestigung einer Suprakonstruktion auf. Apikal davon ist ein beispielsweise an den erwarteten Verlauf der Gingiva angepasster transgingivaler Bereich 22 ausgebildet. Die Formen sowohl eines solchen transgingivalen Bereichs 22 als auch des Pfostens 23 - hier im Vergleich zur Achse 100 abgewinkelt und mit einer optionalen Abflachung gezeichnet - inklusive dessen Winkel zum Befestigungspfosten und also zur Achse 100 sind angepasst an spezifische Bedürfnisse und hängen davon ab, wo im Kiefer das Implantat gesetzt wird oder gesetzt worden ist. Insbesondere kann ein Implantations-Set mit mindestens einem Verankerungsteil mehrere verschiedene Abutments für verschiedene Implantatsionssituationen umfassen.

Der Befestigungspfosten 21 bildet eine Abstützpartie, welche in ihrer Form auf den Abstützbereich 18 abgestimmt ist, und apikal davon eine Verdrehsicherungsstruktur 27 aus. Die Verdrehsicherungsstruktur 27 weist eine Sechskantform, ebenfalls mit abgerundeten Kanten, auf.

Das Abutment weist eine axial durchgehende Öffnung 29 für die Okklusalschraube auf. Ausserdem diese bildet eine Schulter 24 für den Kopf der Okklusalschraube. An der Öffnung ist ausserdem im dargestellten Ausführungsbeispiel ein optionales Abutment-Innengewinde 25 für ein sogenanntes "Retrieval Tool" (ein Werkzeug zum entfernen des Abutments) vorhanden.

Die Okklusalschraube 6 besitzt einen Schaft 61 mit dem auf das Innengewinde des Verankerungsteils abgestimmten Aussengewinde 62 sowie einen Schraubenkopf 65. Dieser bildet eine Eingriffpartie 64 und apikal davon eine Aufweitung 63 aus und bildet ausserdem nach apikal hin einen Schraubenanschlag 66. Die Eingriffpartie 64 ist als Aussenstruktur für das Zusammenwirken mit einer entsprechenden Innenstruktur des Schraubwerkzeugs ausgeformt. Im dargestellten Beispiel hat die Eingriffpartie eine Sechskantstruktur.

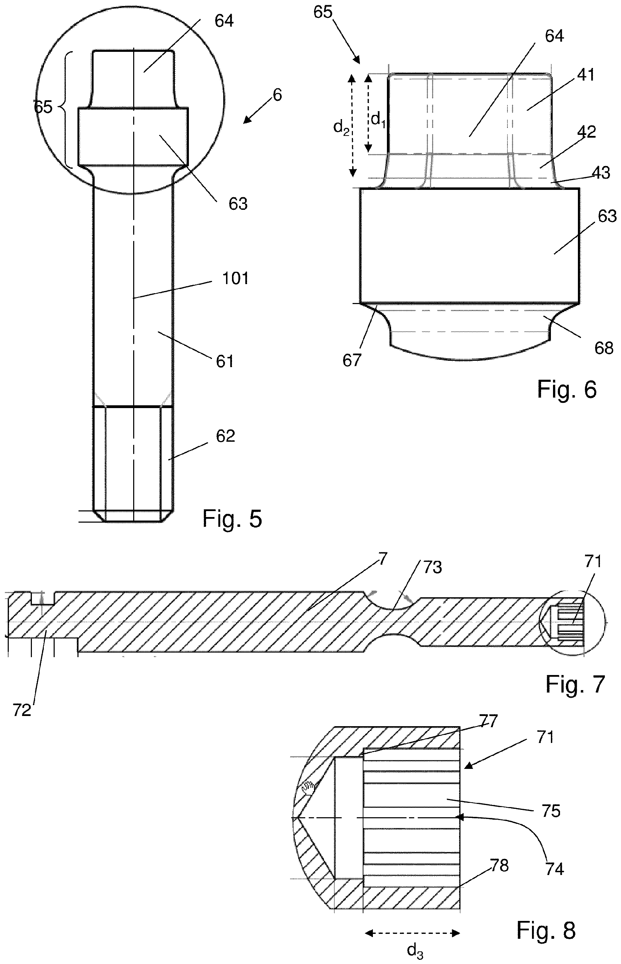

Das Aussengewinde 62 der Okklusalschraube definiert eine Schraubenachse 101 (siehe nachstehend Fig. 5). Diese fällt im dargestellten Ausführungsbeispiel mit der Achse 100 des Implantats zusammen. Das ist an sich keine Notwendigkeit. Es sind auch Konfigurationen denkbar, in dem die Schraubenachse und entsprechend auch die axial durchgehende Öffnung 29 im Abutment sowie der Innengewindebereich 17 zur Achse 100 des Implantats leicht versetzt und/oder leicht abgewinkelt sind.

Das Schraubwerkzeug 7 bildet an einem Ende einen auf die Eingriffpartie 64 abgestimmten Eingriffbereich 71 aus. Am entgegengesetzten (koronalen/proximalen) Ende weist es einen Adapterkopf 72 für ein Schraubinstrument auf, beispielsweise ein Schraubinstrument (Ratsche) zum Anlegen eines definierten, z.B. einstellbaren Drehmoments.

Ein weiteres optionales Merkmal des Schraubwerkzeugs ist ebenfalls in Fig. 1-4 sichtbar. Das Schraubwerkzeug bildet entlang seines Verlaufs eine Einschnürung 73 aus, welche eine Sollbruchstelle bildet. Das Drehmoment zum Brechen des Schraubwerkzeugs an der Sollbruchstelle ist signifikant kleiner als das Drehmoment zum Brechen der Okklusalschraube. Beispielsweise die Sollbruchstelle bei einem Wert zwischen ca. 15-25 Ncm brechen, während die Schraube bei einem Drehmoment bricht, welches beispielsweise mindestens 5 Ncm grösser ist als dieser Wert. Insbesondere kann das Drehmoment zum Brechen der Schraube um mindestens 20% oder mindestens 30% höher sein als dasjenige der Sollbruchstelle. Ein Einstellen der Stärke der Sollbruchstelle kann bspw. ganz einfach über die Materialstärke am Ort der Einschnürung geschehen und ein experimentelles Bestimmen des ein Brechen verursachenden Drehmoments in Funktion der Querschnittsfläche an der Stelle der geringsten Materialstärke beinhalten. Auch das maximale an der Okklusalschraube anlegbare Drehmoment kann experimentell bestimmt werden.

**Figur 5** zeigt die Okklusalschraube 6 in einer Ansicht mit bloss schematisch dargestelltem Aussengewinde 62, und **Figur 6** zeigt den in Fig. 5 eingekreisten Bereich vergrössert und etwas detaillierter. Insbesondere in Fig. 6 sieht man, dass die Eingriffpartie 64 nebst einem zylindrischen (d.h. entlang der Achse translationssymmetrischen) Bereich 41 apikal davon einen sich nach apikal stetig erweiternden Klemmbereich 42 aufweist. Der zylindrische Bereich 41 hat eine Aussensechskantform, d.h. er ist im Querschnitt senkrecht zur Achse hexagonal mit abgerundeten Ecken. Der Klemmbereich hat in der Regel dieselbe Symmetrie wie der zylindrische Bereich, d.h. er ist im vorliegeden Beispiel ebenfalls im Querschnitt hexagonal.

Im dargestellten Ausführungsbeispiel ist der an den zylindrischen Bereich 41 anschliessende Klemmbereich 42 konisch, mit einem Konuswinkel (Kegelwinkel/Kegelöffnungswinkel, entsprechend dem Doppelten des Winkels zur Achse) von ca. 14°. Generell ist bei einem konischen Klemmbereich bevorzugt, wenn der Konuswinkel zwischen 7° und 20°, insbesondere zwischen 10° und 18° ist.

Im dargestellten Ausführungsbeispiel geht der Klemmbereich über eine Hohlkehle in eine nach koronal ausgebildete, durch die Aufweitung gebildete Schulter über, d.h. apikal des Klemmbereichs ist ein konkaver Bereich 43 ausgebildet.

Ein weiteres Detail von bevorzugten Ausführungsformen sieht man in Fig. 6 unterseitig der Aufweitung 63. Der Schraubenanschlag 66 wird nicht durch eine gerade Schulter gebildet sondern weist einen konischen Anschlagbereich 67 mit einem grossen Konuswinkel von über 90° auf. Apikal daran anschliessend bildet die Okklusalschraube 6 eine weitere Hohlkehle 68 aus. Die Schulter 24 im der durchgehenden Öffnung 29 des Abutments kann entsprechend dem konischen Anschlagbereich 67 ebenfalls im nicht-rechten Winkel zur Schraubenachse ausgebildet sein, was man in Fig. 2 sieht.

Es hat sich gezeigt, dass sowohl die Hohlkehle 68 als auch die Konizität des Anschlagsbereichs 67 zur Bruchfestigkeit der keramischen Okklusalschraube beitragen.

Das Schraubwerkzeug ist **Figur 7** im Schnitt dargestellt. **Figur 8** zeigt den in Fig. 7 eingekreisten Bereich vergrössert. Im Eingriffbereich ist relativ dünnwanding mit einer durchschnittlichen (d.h. über die Umfangrichtung gemittelten) Wandstärke von bloss ca. 0.3 mm. Bevorzugt ist die Wandstärke in einem Bereich von zwischen 0.18 mm und 0.4 mm, insbesondere zwischen 0.25 mm und 0.35 mm. Der Eingriffbereich bildet eine zylindrische, d.h. entlang der Schraubenachse translationssymmetrische hexagonale Innenstruktur.

Die axiale Ausdehnung da des Eingriffbereichs 71 (bzw. um genau zu sein von dessen eine zylindrische Innenstruktur 75 aufweisenden Teilbereich) ist grösser als die axiale Ausdehnung d₁ des zylindrischen Bereichs 41 und beispielsweise mindestens gleich gross wie die kumulierte axiale Ausdehnung dz des zylindrischen Bereichs 41und des Klemmbereichs 42, so dass nicht des Eingriffbereichs 71 oder das apikale Ende 77 von dessen zylindrischem Teilbereich, sondern dessen koronales Ende einen Anschlag bildet, wenn das Schraubwerkzeug mit der Okklusalschraube in Eingriff gebracht wird. Dies, indem die umlaufende Innenkante 78 an der Mündung des vom Eingriffbereich 71 gebildeten Öffnung 74 am Klemmbereich 42 ansteht.

## Patentansprüche

1. Okklusalschraube (6) für ein keramisches Implantatsystem, aufweisend einen Schraubenkopf (65) und einen Schraubenschaft (61), wobei der Schraubenschaft ein eine Schraubenachse (101) definierendes Schraubengewinde (62) aufweist und vorgesehen ist, durch eine in axialer Richtung durchgehende Öffnung (29) eines Abutments des Implantatsystems hindurch in ein Innengewinde in einer Aussparung (13) eines Verankerungsteils (1) des Implantatsystems einzugreifen, und wobei der Schraubenkopf apikal einen Schraubenanschlag (66) bildet, wobei die Okklusalschraube aus einem keramischen Material besteht, **dadurch gekennzeichnet, dass** die Okklusalschraube (6) eine Eingriffpartie (64) aufweist, die eine Aussenstruktur aufweist, welche nicht um die Schraubenachse (101) rotationssymmetrisch ist, mindestens bereichsweise entlang der Schraubenachse translationssymmetrisch oder sich nach apikal stetig erweiternd ausgebildet ist und geeignet ist, mit einer entsprechenden Innenstruktur in einer distalen Aussparung eines Schraubwerkzeugs zusammenzuwirken, um die Okklusalschraube drehfest ans Schraubwerkzeug zu koppeln.

2. Okklusalschraube nach Anspruch 1wobei die Eingriffpartie einen entlang der Schraubenachse translationssymmetrischen Bereich (41) und apikal davon einen sich nach apikal stetig erweiternden Klemmbereich (42) aufweist.

3. Okklusalschraube nach Anspruch 2, wobei der Klemmbereich (42) einen Öffnungswinkel von zwischen 7° und 20° aufweist.

4. Okklusalschraube nach einem der Ansprüche 2 oder 3, wobei apikal des Klemmbereichs (42) ein konkaver Bereich (43) ausgebildet ist.

5. Okklusalschraube nach einem der vorangehenden Ansprüche, wobei der Anschlag (66) durch einen konischen Anschlagbereich (67) mit einem Konuswinkel von mehr als 90° gebildet ist, wobei der konische Anschlagbereich (67) beispielsweise über eine Hohlkehle (68) in den Schraubenschaft (61) übergeht.

6. Okklusalschraube nach einem der vorangehenden Ansprüche, wobei die Eingriffpartie (64) die Struktur eines regelmässigen Sechskants aufweist.

7. Dentalimplantatsystem, aufweisend:
- Ein Verankerungsteil (1) zur Verankerung in Knochengewebe, wobei das Verankerungsteil aus einem keramischen Werkstoff gefertigt ist und eine Achse (100) definiert,
- ein Abutment (2) aus einem keramischen Werkstoff,
- Wobei das Verankerungsteil eine zu einem koronalen Ende hin offene Aussparung (13) für einen Eingriff eines Befestigungspfostens (21) des Abutments (2) aufweist,
- und eine Okklusalschraube (6) nach einem der vorangehenden Ansprüche,
- wobei das Abutment (2) eine in axialer Richtung durchgehende Öffnung (29) aufweist, in welche die Okklusalschraube (6) einführbar ist, wobei die Okklusalschraube eingerichtet ist, für eine Befestigung des Abutments am Verankerungsteil (1) in ein Innengewinde (17) einzugreifen, welches am Verankerungsteil in der Aussparung (13) ausgebildet ist,
- und wobei in der Öffnung eine nach koronal ausgebildete Schulter (24) vorhanden ist, welche zusammen mit dem Schraubenanschlag (66) beim Einführen der Schraube in die Öffnung einen Anschlag bildet.

8. System nach Anspruch 7, wobei das Verankerungsteil (1) ein Aussengewinde (11) aufweist, dessen Gewindeachse der Achse (100) entspricht.

9. System nach Anspruch 7 oder 8, wobei die Aussparung (13) einen konischen Abstützbereich (18) bildet, in welchen eine konische Abstützpartie (26) des Abutments (2) eingreift und/oder wobei die Aussparung (13) einen Innenstrukturbereich (19) mit einer eine Eindrehgeometrie zum Zusammenwirken mit einer entsprechenden Verdrehsicherungsstruktur (27) des Abutments (2) bildenden Innenstruktur aufweist, wobei die Aussparung (13) beispielsweise von koronal nach apikal zuerst den Abstützbereich, dann den Innenstrukturbereich und dann einen Innengewindebereich ausbildet.

10. System nach einem der Ansprüche 7-9, wobei das Verankerungsteil (1) als bone-level-Verankerungsteil ausgebildet ist.

11. System nach einem der Ansprüche 7-10, ausserdem aufweisend ein Schraubwerkzeug (7) mit einem Eingriffbereich (71), der eine Öffnung mit einer Innenstruktur bildet, die auf die Aussenstruktur der Eingriffpartie (64) abgestimmt ist, um bei in die Öffnung eingeschobener die Eingriffpartie (64) und die Okklusalschraube durch Drehung des Schraubwerkzeugs um die Schraubenachse (101) zu drehen.

12. Set, aufweisend eine Okklusalschraube nach einem der Ansprüche 1-6 sowie ein Schraubwerkzeug (7) mit einem Eingriffbereich (71), der eine Öffnung mit einer Innenstruktur bildet, die auf die Aussenstruktur der Eingriffpartie (64) abgestimmt ist, um bei in die Öffnung eingeschobener die Eingriffpartie (64) und die Okklusalschraube durch Drehung des Schraubwerkzeugs um die Schraubenachse (101) zu drehen.

13. Set nach Anspruch 12 oder System nach Anspruch 11, wobei die Eingriffpartie (64) einen entlang der Schraubenachse translationssymmetrischen Bereich (41) und apikal davon einen sich nach apikal stetig erweiternden Klemmbereich (42) aufweist, wobei der Eingriffbereich (71) einen Teilbereich aufweist, in welchem die Innenstruktur entlang der Schraubenachse translationssymmetrisch ist, und wobei eine axiale Ausdehnung des Teilbereichs mit der entlang der Schraubenachse translationssymmetrischen Innenstruktur grösser ist als eine axiale Ausdehnung des entlang der Schraubenachse translationssymmetrisch Bereichs (41).

14. Set nach Anspruch 12 oder 13 oder System nach Anspruch 11, wobei die Okklusalschraube apikal der Eingriffpartie eine Aufweitung (63) ausbildet, und wobei ein Aussendurchmesser im Bereich der Aufweitung im Wesentlichen einem Aussendurchmesser des Eingriffbereichs (71) des Schraubwerkzeugs entspricht.

15. Set nach einem der Ansprüche 12-14 oder System nach Anspruch 11, wobei das Schraubwerkzeug eine Sollbruchstelle aufweist, an welcher, wenn das Schraubwerkzeug mit der Okklusalschraube im Eingriff steht, bei einem Ansetzen eines steigenden Drehmoments an einem okklusalen Ende des Schaubwerkzeugs, das Schraubwerkzeug bricht, ohne dass die Okklusalschraube bricht.

## Claims

1. An occlusal screw (6) for a ceramic implant system, having a screw head (65) and a screw shank (61), the screw shank having a screw thread (62) defining a screw axis (101) and being intended to engage, through an opening (29) of an abutment of the implant system, the opening being a through-opening in axial direction, into an internal thread in a recess (13) of an anchoring part (1) of the implant system, and wherein the screw head apically forms a screw stop (66), the occlusal screw being made of a ceramic material, **characterized in that** the occlusal screw (6) has an engagement portion (64) which has an outer structure not being rotationally symmetrical about the screw axis (101), is designed at least in regions along the screw axis to be translationally symmetrical or to widen continuously in the apical direction and is suitable for interacting with a corresponding inner structure in a distal recess of a screw driver in order to couple the occlusal screw to the screw driver in a rotationally fixed manner.

2. The occlusal screw according to claim 1, wherein the engagement portion region (41) being has a translation-symmetrical along the screw axis and, apically thereof, a clamping region (42) continuously widening towards apically.

3. The occlusal screw according to claim 2, wherein the clamping region (42) has an opening angle of between 7° and 20°.

4. The occlusal screw according to one of claims 2 or 3, wherein a concave region (43) is formed apically of the clamping region (42).

5. The occlusal screw according to any one of the preceding claims, wherein the stop (66) is formed by a conical stop region (67) with a cone angle of more than 90°, wherein the conical stop region (67) merges into the screw shank (61), for example via a fillet (68).

6. The occlusal screw according to any of the preceding claims, wherein the engagement portion (64) has the structure of a regular hexagon.

7. A dental implant system, comprising:
- An anchoring part (1) for anchoring in bone tissue, the anchoring part being made of a ceramic material and defining an axis (100),
- an abutment (2) made of a ceramic material,
- the anchoring part having a recess (13) open towards a coronal end for engagement of a fixing post (21) of the abutment (2)
- and an occlusal screw (6) according to any one of the preceding claims,
- wherein the abutment (2) has an opening (29) which is continuous in the axial direction and into which the occlusal screw (6) can be introduced, wherein the occlusal screw is configured to engage in an internal thread (17) which is formed on the anchoring part in the recess (13) for fastening the abutment to the anchoring part (1),
- and wherein there is a coronally formed shoulder (24) in the opening which, together with the screw stop (66), forms a stop when the screw is inserted into the opening.

8. The system according to claim 7, wherein the anchoring part (1) has an external thread (11), the thread axis of which corresponds to the axis (100).

9. The system according to claim 7 or 8, wherein the recess (13) forms a conical support portion (18) in which a conical support portion (26) of the abutment (2) engages and/or wherein the recess (13) has an internal structure portion (19) with an internal structure forming a twist-in geometry for cooperation with a corresponding anti-rotation structure (27) of the abutment (2), wherein the recess (13) forms, for example, from coronal to apical, first the support portion, then the internal structure portion and then an internally threaded portion.

10. The system according to any one of claims 7-9, wherein the anchoring part (1) is formed as a bone-level anchoring part.

11. The system according to any one of claims 7-10, further comprising a screw driver (7) having an engagement portion (71) forming an aperture with an internal structure matching the external structure of the engagement portion (64) to rotate the engagement portion (64) and the occlusal screw by rotation of the screw driver about the screw axis (101) when inserted into the aperture.

12. A set comprising an occlusal screw according to any one of claims 1-6, and a screw driver (7) having an engagement portion (71) defining an aperture with an internal structure matched to the external structure of the engagement portion (64) to rotate the engagement portion (64) and the occlusal screw by rotation of the screw driver about the screw axis (101) when inserted into the aperture.

13. The set according to claim 12 or the system according to claim 11, wherein the engagement portion (64) comprises a translation-symmetrical region (41) along the screw axis and, apically thereof, a clamping region (42) continuously widening towards apically, wherein the engagement region (71) comprises a partial region in which the inner structure is translation-symmetrical along the screw axis, and wherein an axial extension of the partial region with the translation-symmetrical inner structure along the screw axis is greater than an axial extension of the translation-symmetrical region (41) along the screw axis.

14. The set according to claim 12 or 13 or the system according to claim 11, wherein the occlusal screw forms a flare (63) apically of the engagement portion, and wherein an outer diameter in the region of the flare substantially corresponds to an outer diameter of the engagement portion (71) of the screw driver.

15. The set of any one of claims 12-14 or the system of claim 11, wherein the screw driver has a predetermined breaking point at which, when the screw driver is engaged with the occlusal screw, when an increasing torque is applied to an occlusal end of the screw driver, the screw driver breaks without the occlusal screw breaking.

## Revendications

1. Vis occlusale (6) pour un système d'implant céramique, présentant une tête de vis (65) et une tige de vis (61), la tige de vis présentant un filet de vis (62) définissant un axe de vis (101) et étant prévue pour s'engager à travers une ouverture (29) continue dans le sens axial d'un pilier du système d'implant dans un filet intérieur dans un évidement (13) d'une partie d'ancrage (1) du système d'implant, et la tête de vis formant apicalement une butée de vis (66), la vis occlusale étant constituée d'un matériau céramique, **caractérisée en ce que** la vis occlusale (6) présente une partie d'engagement (64) qui présente une structure extérieure qui n'est pas symétrique en rotation autour de l'axe de vis (101), qui est réalisée au moins par endroits avec une symétrie de translation le long de l'axe de vis ou qui s'élargit en continu vers l'apical et qui est appropriée pour coopérer avec une structure intérieure correspondante dans un évidement distal d'un outil de vissage, afin de coupler la vis occlusale à l'outil de vissage de manière à ce qu'elle ne puisse pas tourner.

2. Vis occlusale selon la revendication 1, dans laquelle la partie d'engagement présente une zone (41) à symétrie de translation le long de l'axe de la vis et, apicalement, une zone de serrage (42) qui s'élargit continuellement vers l'apical.

3. Vis occlusale selon la revendication 2, dans laquelle la zone de serrage (42) présente un angle d'ouverture compris entre 7° et 20°.

4. Vis occlusale selon l'une des revendications 2 ou 3, dans laquelle une zone concave (43) est formée apicalement à la zone de serrage (42).

5. Vis occlusale selon l'une des revendications précédentes, dans laquelle la butée (66) est formée par une zone de butée conique (67) présentant un angle de conicité supérieur à 90°, la zone de butée conique (67) se prolongeant par exemple par une gorge (68) dans la tige de vis (61).

6. Vis occlusale selon l'une des revendications précédentes, dans laquelle la partie d'engagement (64) présente la structure d'un hexagone régulier.

7. Système d'implant dentaire, comprenant :
- Une pièce d'ancrage (1) pour l'ancrage dans le tissu osseux, la pièce d'ancrage étant fabriquée en un matériau céramique et définissant un axe (100),
- un pilier (2) en matériau céramique,
- La pièce d'ancrage présentant un évidement (13) ouvert vers une extrémité coronale pour un engagement d'un pilier de fixation (21) du pilier (2),
- et une vis occlusale (6) selon l'une des revendications précédentes,
- le pilier (2) présentant une ouverture (29) continue dans la direction axiale, dans laquelle la vis occlusale (6) peut être introduite, la vis occlusale étant conçue pour s'engager, pour une fixation du pilier sur la pièce d'ancrage (1), dans un filetage intérieur (17) qui est formé sur la pièce d'ancrage dans l'évidement (13),
- et dans lequel il existe dans l'ouverture un épaulement (24) réalisé en direction coronale, qui forme une butée avec la butée de vis (66) lors de l'introduction de la vis dans l'ouverture.

8. Système selon la revendication 7, dans lequel la pièce d'ancrage (1) présente un filetage extérieur (11) dont l'axe du filetage correspond à l'axe (100).

9. Système selon la revendication 7 ou 8, dans lequel l'évidement (13) forme une zone d'appui conique (18) dans laquelle s'engage une partie d'appui conique (26) du pilier (2) et/ou dans lequel l'évidement (13) présente une zone de structure interne (19) avec une structure interne formant une géométrie de vissage pour coopérer avec une structure anti-rotation correspondante (27) du pilier (2), l'évidement (13) formant par exemple, de la partie coronale vers la partie apicale, d'abord la zone de support, puis la zone de structure interne, puis une zone de filetage interne.

10. Système selon l'une des revendications 7 à 9, dans lequel la pièce d'ancrage (1) est une pièce d'ancrage bone-level.

11. Système selon l'une quelconque des revendications 7 à 10, comprenant en outre un outil de vissage (7) avec une zone d'engagement (71) formant une ouverture avec une structure interne adaptée à la structure externe de la partie d'engagement (64) pour, lorsqu'elle est insérée dans l'ouverture, faire tourner la partie d'engagement (64) et la vis occlusale par rotation de l'outil de vissage autour de l'axe de la vis (101).

12. Ensemble comprenant une vis occlusale selon l'une des revendications 1 à 6 et un outil de vissage (7) avec une zone d'engagement (71) formant une ouverture avec une structure interne qui est adaptée à la structure externe de la partie d'engagement (64) pour, lorsqu'elle est insérée dans l'ouverture, faire tourner la partie d'engagement (64) et la vis occlusale en faisant tourner l'outil de vissage autour de l'axe de vis (101).

13. Ensemble selon la revendication 12 ou système selon la revendication 11, dans lequel la partie d'engagement (64) présente une zone (41) à symétrie de translation le long de l'axe de la vis et, apicalement par rapport à celle-ci, une zone de serrage (42) s'élargissant continuellement vers l'apical, dans lequel la zone d'engagement (71) présente une zone partielle dans laquelle la structure interne est à symétrie de translation le long de l'axe de la vis, et dans lequel une extension axiale de la zone partielle avec la structure interne à symétrie de translation le long de l'axe de la vis est plus grande qu'une extension axiale de la zone (41) à symétrie de translation le long de l'axe de la vis.

14. Ensemble selon la revendication 12 ou 13 ou système selon la revendication 11, dans lequel la vis occlusale forme un élargissement (63) apicalement à la partie d'engagement, et dans lequel un diamètre extérieur dans la zone de l'élargissement correspond sensiblement à un diamètre extérieur de la partie d'engagement (71) de l'outil de vissage.

15. Ensemble selon l'une quelconque des revendications 12 à 14 ou système selon la revendication 11, dans lequel l'outil de vissage présente un point de rupture au niveau duquel, lorsque l'outil de vissage est en prise avec la vis occlusale, lors de l'application d'un couple croissant à une extrémité occlusale de l'outil de vissage, l'outil de vissage se rompt sans que la vis occlusale ne se rompe.
